# EUROPÄISCHE PATENTSCHRIFT

(11) **EP 1 346 650 B1**
(45) Veröffentlichungstag und Bekanntmachung des Hinweises auf die Patenterteilung: **07.06.2006**
(21) Anmeldenummer: 02006492.9
(22) Anmeldetag: 22.03.2002
(51) Int. Cl.: A23P 1/12, A23L 1/212, A23L 3/22

(54) **Verfahren zur Herstellung eines niederviskosen breiartigen Nahrungsmittels**
Method for producing a pulpy foodstuff of low viscosity
Méthode pour la production d'un produit alimentaire pâteux à faible viscosité

(43) Veröffentlichungstag der Anmeldung: 24.09.2003
(73) Patentinhaber: SOCIETE DES PRODUITS NESTLE S.A., 1800 Vevey (CH)
(72) Erfinder: Zahner, Peter, 84489 Burghausen (DE); Fuchs, Ulrike, 84036 Landshut (DE); Schröder, Volker, 84577 Tüssling (DE)
(74) Vertreter: Andrae, Steffen

(56) Entgegenhaltungen:
- US-A- 5 296 253
- PATENT ABSTRACTS OF JAPAN vol. 011, no. 222 (C-435), 18. Juli 1987 (1987-07-18) -& JP 62 036155 A (KYODO NYUGYO KK), 17. Februar 1987 (1987-02-17)
- "Extrusion Cooking" 1989 , AMERICAN ASSOCIATION OF CEREAL CHEMISTS , ST.PAUL, MINNESOTA, USA XP002200696 * Seite 452, Absatz 6 - Absatz 7 * * Seite 453; Tabelle XIV * * Seite 456, Absatz 2 *

## Beschreibung

Die Erfindung betrifft ein im wesentlichen kontinuierliches Verfahren zur Herstellung eines niederviskosen breiartigen (pürierten) Nahrungsmittels für die Ernährung von Säuglingen und Kleinkindern aus Nahrungsmittelausgangsprodukten mit einem Wassergehalt von mehr als 45 Gew.-%. Als "niederviskoses breiartiges Nahrungsmittel" wird dabei in der vorliegenden Anmeldung ein Nahrungsmittel bezeichnet, das im Moment des Abschlusses der technologischen Schritte zu seiner Herstellung fließfähig ist und keine spürbaren elastischen Eigenschaften aufweist. Die genannten Eigenschaften bleiben normalerweise auch im verpackten gebrauchs- bzw. verzehrfertigen Produkt erhalten, wobei jedoch die nachträgliche Ausbildung einer schwach elastischen bis gelartigen Struktur, z.B. im Sinne einer Löffelfestigkeit, der hergestellten Produkte beim Lagern und/oder in einer Verpackung nichts am Charakter derartiger Produkte als "niederviskose breiartige Nahrungsmittelprodukte" ändern soll.

Ein typisches breiartiges Nahrungsmittel ist eine Fertigmahlzeit für Säuglinge und Kleinkinder. Hauptbestandteile derartiger Nahrungsmittel sind in Breiform überführte gekochte Gemüse und/oder Früchte, die gegebenenfalls auch mehr oder weniger große Anteile an proteinischen tierischen Nahrungsmitteln (Fleisch, Fisch) in fein zerkleinerter Form enthalten können. Derartige Nahrungsmittel werden normalerweise als Fertigprodukte in Form sogenannter "Shelf-Stable Products" vom Handel vertrieben. Produkte gemäß der vorliegenden Erfindung können jedoch auch gekühlt vertriebene Produkte sein, die beispielsweise auch als Halbfertigprodukte oder breiartige Zutaten für die Ernährung von Kindern bestimmt sind, wobei derartige Halbfertigprodukte zur Bereitung verzehrfertiger Mahlzeiten mit anderen Nahrungsmittelbestandteilen kombiniert werden können.

Für die Ernährung von Säuglingen und Kleinkindern bestimmte breiartige Nahrungsmittel in Form von Gemüse- oder Fruchtpürees werden herkömmlich dadurch hergestellt, daß man ausgewählte Rohmaterialien säubert und gegebenenfalls von Schalen und/oder Kernen und Kerngehäusen befreit und dann grob- und feinzerkleinert und kocht, wozu man einen Kochbehälter oder bestimmte Spezialvorrichtungen verwendet. Zur Gewährleistung der erforderlichen mikrobiellen Stabilität müssen während der Herstellung bzw. in einem nachgelagerten Schritt Bedingungen durchlaufen werden, die zu einer Sterilisierung der Produkte führen. Abschließend verpackt man entweder die unter Sterilbedingungen hergestellten Produkte aseptisch, oder man unterwirft die Produkte nach dem Verpacken noch einer In-Pack-Sterilisierung bzw. Pasteurisierung. Derartige Verfahren können bisher nur ansatzweise (als "Batch-Verfahren") durchgeführt werden. Dabei hat es sich als schwierig erwiesen, bei den von dem Produkt zu durchlaufenden Wärmebehandlungen zum Kochen oder Sterilisieren/-Pasteurisieren gleichförmige Bedingungen einzuhalten, die als optimal im Hinblick auf die Erhaltung von Nährstoffen und Vitaminen, Geschmacksentwicklung und Produktsterilität angesehen werden können. Die ansatzweise Herstellung birgt außerdem das Risiko einer gewissen Schwankung der Produktqualität von Ansatz zu Ansatz.

Der Fachmann würde es daher begrüßen, ein kontinuierliches Verfahren zur Verfügung zu haben, bei dem eine hohe Gleichmäßigkeit der Verfahrensbedingungen eine hohe gleichmäßige Produktqualität gewährleistet und gleichzeitig die Vorteile einer kontinuierlichen Prozeßführung erreicht werden.

Es ist im Bereich der Lebensmittelherstellung bekannt, daß zahlreiche Herstellungsverfahren vorteilhaft unter Verwendung von Extrudern durchgeführt werden können, in denen bei einer kontinuierlichen Herstellung der gewünschten Produkte Einsatzmaterialien miteinander vermischt, gegart und/oder einer Stoffumwandlung unterzogen werden, wobei gleichzeitig am Extruderaustritt eine Formgebung der Produkte möglich ist. Eine bekannte Gruppe von Verfahren ist als sogenannte "Kochextrusion" bekannt, die insbesondere auf dem Gebiet der Herstellung von Snacks, backwarenähnlichen Produkten, Produkten aus dem Tierfutterbereich erfolgreich eingesetzt wird. Bei der Kochextrusion wird in der Regel so gearbeitet, daß am Extruderaustritt aus dem unter Überdruck stehenden heißen Produkt unter Aufblähung des Produkts Wasser entweicht, so daß geblähte (poröse), weitgehend getrocknete Produkte erhalten werden können. Die Extrudertechnologie wird außerdem z.B. auch zur kontinuierlichen Herstellung von Produkten für den Suppenbereich, beispielsweise Soßengrundlagen und ähnliches, genutzt.

Die Extrudertechnologie wird bisher in erster Linie für Anwendungen genutzt, bei denen Nahrungsmittelmischungen mit einem hohen Anteil an Getreidestärke verarbeitet werden, wobei es im Extruder zu einer Homogenisierung der Stärkeanteile mit anderen Bestandteilen, zur Gelatinisierung der Stärke und einem Kochen der Produkte kommt. Derartige Produkte sind relativ viskos, so daß im Extruder die gewünschten bzw. erforderlichen Innendrucke aufgebaut werden können, wie sie für eine gute Förderung und Durchmischung in den meisten Fällen wünschenswert sind. Der Feuchtigkeitsgehalt erreicht dabei maximal Werte von 45% (Extrusion cooking, R.Gay, CRC Press, 2001, S.47). Die Nutzung von Extrudern wird jedoch auch für andere Lebensmittelprodukte vorgeschlagen, z.B. weitgehend wasserfreien Massen auf Fettbasis, wobei die Herstellung von Schokolademassen besonders zu erwähnen ist.

JP62036155 offenbart z.B. die Herstellung einer vegetarischen Paste in einem Doppelschneckenextruder.

Im Falle von breiartigen Nahrungsmitteln des eingangs geschilderten Typs oder Saaten-, Fleisch- und Fischbreien und -pasten oder Erzeugnissen auf der Basis von Milcherzeugnissen steht bisher noch kein kontinuierliches Verfahren unter Anwendung der Extrudertechnologie zur Verfügung. Dafür gibt es einige wesentliche Gründe, zu denen vor allem die folgenden zu zählen sind: Die für Breie/Pürees der eingangs geschilderten Art verwendeten Ausgangsmaterialien wie Gemüse und Früchte weisen einen hohen Feuchtigkeitsgehalt auf, der in der Regel deutlich über 45 Gew.-%, insbesondere über 50 Gew.-% und meist über 70 Gew.-% liegt. So liegt der Wassergehalt von rohen Kartoffeln normalerweise im Bereich von 75 bis 80 Gew.-%, von Gemüsen im Bereich von 85 bis 95 Gew.-% und von Obst im Bereich von 80 bis 85 Gew.-%. Entsprechend gering ist der Gehalt an Feststoffen. Da ein erheblicher Teil des Wassergehalts der Ausgangsprodukte beim Zerkleinern und/oder Kochen freigesetzt wird und die beim Zerkleinern erhaltene Masse, und zwar sowohl vor dem Kochen als auch nach dem Kochen, eine relativ niedrige Viskosität aufweist, ist sie mit Massen auf Stärkegrundlage, wie sie bisher typischerweise in Extrudern verarbeitet werden, nicht vergleichbar. In Extrudern wird bisher eine gewisse Mindestviskosität benötigt, um den gewünschten Förderdruck aufbauen zu können. Außerdem ist bei den derzeit üblichen Extrudern eine gewisse Festigkeit und Zähigkeit der bearbeiteten Masse auch erwünscht, damit die Extruderschnecken, die eine erhebliche Länge aufweisen können, von der bearbeiteten Masse abgestützt und während des Prozesses mitgetragen werden. Eine gewisse Zähigkeit der zu bearbeitenden Masse ist auch für den in vielen Extrudern erwünschten Kneteffekt erforderlich, der gleichzeitig eine gleichmäßigere Wärmeübertragung unterstützt. Die gewünschte Temperatur wird in vielen Extrudern dadurch eingeregelt, daß man den Extrudermantel, gegebenenfalls abschnittsweise, extern aufheizt, indem man Heiz- (oder ggf. auch Kühl-) Flüssigkeiten durch diesen zirkulieren läßt.

Niederviskose brei- und püreeartige Nahrungsmittel lassen sich mit den herkömmlichen Extrudern nicht ohne weiteres in der erforderlichen Qualität herstellen. Orientierende Vorversuche für die vorliegende Erfindung zeigten, daß bei der Verwendung stark wasserhaltiger Einsatzprodukte unter der Wirkung des Extruders ein Auspressen der Feuchtigkeit (Frucht- und Gemüsesaft) erfolgt, daß im Falle von Gemüsestücken die Komplettierung des Kochvorgang Probleme bereiten kann, und daß, in Abhängigkeit von den eingesetzten Gemüse- oder Fruchtmaterialien, die gewünschte homogene Konsistenz der hergestellten Breie und Pürees am Extruderausgang nur schwer zu erreichen ist.

Die weiteren Forschungsarbeiten zur Verwirklichung der vorliegenden Erfindung führten jedoch zu Lösungen der genannten Probleme, die eine qualitativ hochwertige Herstellung von breiartigen, niederviskosen Nahrungsmittelprodukten auf kontinuierliche Weise mit einer Vorrichtung vom Extrudertyp ermöglicht.

Die Erfindung betrifft ein erfindungsgemäßes Verfahren gemäß Anspruch 1 sowie verteilhafte Ausgestaltungen nach Maßgabe der Unteransprüche 3 bis 9.

Die Herstellung niederviskoser breiartiger Nahrungsmittel aus Nahrungsmittelausgangsprodukten mit einem Wassergehalt von mehr als 45 Gew.-%, insbesondere mehr als 70 Gew.-%, unter Verwendung einer Vorrichtung vom Extrudertyp wird dadurch möglich, daß man die Ausgangsprodukte unter Überdruck, und zwar unter mechanischem Dosier- bzw. Förderdruck, in den ersten Arbeitsabschnitt eines Extruders einführt, in dem ein Feinzerkleinern und Kochen der Ausgangsprodukte erfolgt. Der positive Förderdruck der zugeführten Materialien erhöht den Druck der Ausgangsmaterialien im ersten Arbeitsabschnitt des Extruders und ermöglicht eine Zerkleinerung im erforderlichen Ausmaß. Die Ausgangsprodukte werden in ganzer, stückiger (z.B. gewürfelter), geraspelter oder gemahlener Form eingesetzt. Es kann dabei auch vorteilhaft sein, die Produkte in tiefgefrorener Form zuzugeben, da dadurch die Festigkeit und Sprödigkeit der Produkte erhöht und die Zerkleinerung erleichtert werden kann. Die Zugabe der Ausgangsprodukte kann auch in gekühlter oder gegarter Form erfolgen. In Abhängigkeit vom Typ der zu verarbeitenden Produkte werden diese nach, während oder vor der im ersten Arbeitsabschnitt ablaufenden Zerkleinerung gegart oder vorgegart, d.h. gekocht. Durch die Überdruckdosierung in dem ersten Arbeitsabschnitt ist es möglich, dort ein ausreichend gekochtes und zerkleinertes (weitgehend homogenisiertes) Produkt zu erhalten, das, gegebenenfalls mit weiteren Feinzerkleinerungsschritten stromab im Extruder, die Erreichung der gewünschten Produktqualität ermöglicht.

Ferner kann es vorteilhaft oder auch erforderlich sein, in Kombination mit der Druckförderung die in der ersten Stufe aus dem unter Druck oder drucklos zugeführten Produkt freigesetzte Flüssigkeit (Fruchtsaft, Gemüsesaft) an einer oder mehreren Stellen am Boden des jeweiligen Extruderabschnitts zu sammeln und aus dem Extruder abzuziehen und dann im Bypass einer späteren Stufe der Herstellung des gewünschten Nahrungsmittels wieder zuzuführen. Diese Maßnahme führt zu einer Erhöhung des Feststoffgehalts der im Extruder verarbeiteten Masse, ermöglicht eine gesonderte Behandlung des flüssigen Produkts, wobei dieses gekocht, sterilisiert oder pasteurisiert und/oder gegebenenfalls auch konzentriert werden kann, so daß es in einer Qualität, die für das Endprodukt erforderlich ist, vor der endgültigen Produktherstellung wieder ganz oder teilweise mit der im Extruder verarbeiteten Masse vereinigt werden kann. Die Vereinigung mit der verarbeiteten Masse kann im Extruder erfolgen, das flüssige Produkt kann jedoch ganz oder teilweise auch erst dem bereits extrudierten Produkt zugemischt werden. Die genannte Vorgehensweise kann auch im Hinblick auf eine thermische Schonung empfindlicher Nahrungsmittelinhaltsstoffe im Saft von Vorteil sein, indem die Koch- und/oder Sterilisier- oder Pasteurisierschritte auf das erforderliche Minimum beschränkt werden können.

Bei dem Verfahren wird am Ende des ersten Arbeitsabschnittes bereits eine weitgehend homogene Masse erhalten, die in gewünschter Weise gegart ist. Diese Masse wird, in der Regel unter weiterer Durchmischung und Feinzerkleinerung, im Extruder zu einem weiteren Arbeitsabschnitt gefördert, in dem solche Bedingungen eingestellt werden (Temperatur, Verweilzeit), daß das im Extruder geförderte Produkt in der für das jeweilige Produkt erforderlichen Weise sterilisiert oder pasteurisiert wird. Bei der Arbeitsweise unter Abzweigung der freigesetzten Flüssigkeit wird diese, nachdem sie vorzugsweise einer eigenen Sterilisierungsbehandlung oder Pasteurisierung unterzogen wurde, im oder nach dem Extruder wieder mit dem sterilisierten (UHT-behandelten) oder pasteurisierten Produkt vereinigt und mit diesem gründlich vermischt. Anschließend erfolgt eine Entgasung des gebildeten Produkts, die zu einem dichten Brei führt und die außerdem dafür sorgt, daß im Produkt vorhandener Sauerstoff entfernt wird und sich das fertige Produkt nicht mehr in unerwünschter Weise oxidativ verändert. Der entgaste Brei, dessen Temperatur unter Gesichtspunkten der Produktqualität genau eingeregelt wird, Verläßt als brei- oder pastenförmiges Produkt den Extruder und wird entweder aseptisch direkt verpackt, oder so verpackt, daß das Produkt anschließend noch einer In-Pack-Sterilisierung unterzogen werden kann. Ist das Produkt ein Halbfertigprodukt, das anschließend noch zu einem Endprodukt weiter verarbeitet oder in ein solches eingearbeitet werden soll, kann es auch in geeignete Behältern abgefüllt und bis zu seiner weiteren Verarbeitung zwischengelagert werden.

Das bisher in seinen Grundzügen beschriebene Verfahren kann in mannigfacher Weise modifiziert werden. So ist es einerseits möglich, zusätzlich zu den genannten Nahrungsmittelausgangsprodukten in Form von ganzen, stückigen (z.B. gewürfelten), geraspelten oder gemahlenen Gemüsen, Saaten, Früchten oder auch Fleisch, Fisch und Erzeugnissen auf der Basis von Milcherzeugnissen weitere Bestandteile zuzumischen. Diese Zumischung kann ganz oder teilweise am Eingang in den Extruder erfolgen, wo beispielsweise auch Trockenprodukte, z.B. Kartoffelflocken, eingesetzt werden können, die einen Teil des freigesetzten Saftes binden und dadurch den Gesamtfeuchtigkeitsgehalt der verarbeiteten Masse absenken. Weitere Bestandteile, die auch aus Rezepturgründen zugesetzt werden, können jedoch auch später seitlich an einer geeigneten Stelle in den Extruder eingespeist werden. In den meisten Fällen ist es wünschenswert, diese weiteren Bestandteile während des im ersten Abschnitt ablaufenden Kochvorgangs zuzusetzen, so daß sie während des Kochvorgangs und während des Zerkleinerns und Mischens vorhanden sind und ein gleichförmiges Produkt erhalten wird. Es liegt jedoch auch im Bereich der vorliegenden Erfindung, derartige weitere Bestandteile weiter stromab, oder gegebenenfalls auch mit dem abgezogenen und im Bypass geführten Flüssigbestandteil zuzusetzen. Z.B. können die Konsistenz beeinflussende Zusätze (Verdickungsmittel) mit Vorteil auch dem Flüssigzweig zugesetzt werden, wobei sie darin bei der separaten Wärmebehandlung der Flüssigkeit eine gewisse Konsistenz ausbilden können, und mit dieser ggf. verdickten oder vorverdickten Flüssigkeit wieder in den Extruder zurückgeführt werden.

Es liegt dabei im Rahmen der vorliegenden Erfindung, als zugesetzte Bestandteile nutritionell wertgebende Inhaltsstoffe, z.B. Vitamine und Mineralstoffe, oder biologisch aktive Substanzen (z.B. Enyzme) oder Mikroorganismen zuzusetzen. Soweit diese temperaturempfindlich sind, werden diese auf eine schonende Weise zugesetzt, z.B. erst nach den Erhitzungsstufen im Extruder und/oder dem Flüssigkeitsstrom.

Da es sich ferner gezeigt hat, daß bei den relativ niederviskosen Massen, die im Extruder einer Bearbeitung (Stoffumwandlung), Garung und Förderung unterliegen, eine ausreichende Wärmeübertragung in den gewünschten oder durch die Extruderkonstruktion vorgegebenen Zeiträumen allein durch einen Kontakt mit den erhitzten Extruderwänden unter Umständen nur unbefriedigende Ergebnisse liefert, ist es gemäß einer bevorzugten Ausführungsform der Erfindung vorgesehen, während des Kochvorgangs und/oder während des Mischvorgangs und/oder während der Sterilisierbehandlung (UHT-Behandlung) oder Pasteurisierung aus externen Quellen Heißdampf in den Extruder einzuführen. Der zugeführte Heißdampf unterstützt die Durchmischung, sorgt für einen schnellen vollständigen Wärmeübergang und verkürzt auf diese Weise die für die Garung und Produktbereitung erforderlichen Zeiträume. Es liegt dabei im Bereich der vorliegenden Erfindung, überschüssige Dampfmengen bei der Entgasung oder in einer gesonderten Dampfabzugsstufe bereits vorher aus dem Extruder wieder abzuziehen.

Es liegt jedoch im Bereich der vorliegenden Erfindung, auf die Zufuhr von Heißdampf zu verzichten und die erforderliche Energie nur über Heizmäntel zuzuführen.

Die genauen Verfahrensparameter hängen zu einem erheblichen Anteil von den herzustellenden Produkten ab. Relativ harte Gemüse (Kartoffeln, Karotten) oder Saaten erfordern eine andere Koch- und Zerkleinerungsbehandlung als Früchte oder relativ faserfreie Gemüse, z.B. Blattgemüse, oder auch Fleisch und Fisch sowie Erzeugnisse auf der Basis von Milcherzeugnissen. Die Feineinstellung der Rezepturen und die Anpassung der erforderlichen Betriebsparameter hat der Fachmann im Einzelfall durchzuführen.

## Patentansprüche

1. Verfahren zur Herstellung eines niederviskosen, breiartigen Nahrungsmittels für die Ernährung von Säuglingen und Kleinkindern aus Nahrungsmittel-Ausgangsprodukten mit einem Wassergehalt von mehr als 45 Gew.-%, **dadurch gekennzeichnet, dass** man
- die Ausgangsprodukte in ganzer, stückiger, geraspelter oder gemahlener Form unter Überdruck einem ersten Arbeitsabschnitt einer Vorrichtung vom Extrudertyp zuführt, in dem ein Zerkleinern oder weiteres Zerkleinern sowie Kochen der Ausgangsprodukte erfolgt, wobei das Kochen vor, während und/oder nach dem Zerkleinern erfolgt,
- die zerkleinerten und gekochten Ausgangsprodukte einem zweiten Arbeitsabschnitt des Extruders zuführt, in dem eine Temperaturbehandlung unter UHT-Bedingungen oder unter Pasteurisierungsbedingungen erfolgt,
- die UHT-behandelten oder pasteurisierten Produkte entgast und aus dem Extruder direkt einer Verpackungsstation zuführt, wo sie
- entweder unter aseptischen Bedingungen abgefüllt, oder
- abgefüllt und einer In-Pack-Sterilisierung oder Pasteurisierung unterzogen werden oder
- als Halbfabrikate zur weiteren Verarbeitung in geeigneten Behältnisse abgefüllt und gelagert werden.

2. Verfahren nach Anspruch 1, **dadurch gekennzeichnet, dass** die Nahrungsmittel-Ausgangsprodukten mit einem Wassergehalt von mehr als 45 Gew.-% ausgewählt sind aus Gemüsen, Früchten, Saaten, Fleisch- und Fischprodukten, Erzeugnissen auf der Basis von Milcherzeugnissen und Mischung davon.

3. Verfahren nach Anspruch 2, **dadurch gekennzeichnet, dass** die Nahrungsmittel-Ausgangsprodukte dem Extruder in tiefgefrorener oder frischer Form zugeführt werden.

4. Verfahren nach Anspruch 2 oder 3, **dadurch gekennzeichnet, dass** die Nahrungsmittel-Ausgangsprodukte in vorzerkleinerter Form zugeführt werden.

5. Verfahren nach einem der Ansprüche 1 bis 4, **dadurch gekennzeichnet, dass** man dem Extruder zusätzlich weitere Nahrungsmittelbestandteile zuführt, die ausgewählt sind aus Wasser, Ölen, Fetten, nutritionell wertgebenden Inhaltsstoffen, Milchprodukten, Emulgatoren, biologisch aktiven Substanzen und Organismen, Würzmitteln, Salzen, Zuckern, Gewürzen, Proteinen und Mitteln zur Konsistenzbeeinflussung des herzustellenden Produkts.

6. Verfahren nach einem der Ansprüche 1 bis 5, **dadurch gekennzeichnet, dass** man das Kochen und/oder die UHT-Behandlung oder die Pasteurisierung unter Zufuhr von extern erzeugtem Heißdampf in den Extruder vornimmt.

7. Verfahren nach Anspruch 1, **dadurch gekennzeichnet, dass** man die dem Extruder zugeführten und gegebenenfalls gekochten Produkte **dadurch** zerkleinert, dass man sie durch eine in den Förderweg der Produkte eingeschaltete Zerkleinerungsvorrichtung führt.

8. Verfahren nach Anspruch 7, **dadurch gekennzeichnet, dass** die Zerkleinerungsvorrichtung Schneidelemente und/oder eine Gitter- und/oder Lochstruktur aufweist und/oder vom Kolloidmühlentyp ist.

9. Verfahren nach einem der Ansprüche 1 bis 8, **dadurch gekennzeichnet, dass** man dem Extruder vor der UHT-Behandlung oder Pasteurisierung zusätzlich Nahrungsmittel-Bestandteile in trockener Form zuführt.

## Claims

1. Method for producing a pulpy foodstuff of low viscosity for the feeding of babies and infants from foodstuff starting materials having a water content of more than 45% by weight, **characterized in that**
- the starting materials in whole, lump, grated or ground form are fed under superatmospheric pressure to a first operating section of an apparatus of the extruder type in which comminution or further comminution and cooking of the starting materials take place, the cooking being effected before, during and/or after the comminution,
- the comminuted and cooked starting materials are fed to a second operating section of the extruder in which a thermal treatment takes place under UHT conditions, or under pasteurising conditions,
- the UHT-treated or pasteurised products are degassed and are fed from the extruder directly to a packaging station where they are
- either filled under aseptic conditions or
- filled and subjected to an in-pack sterilization or pasteurisation or
- filled as semifinished products for further processing into suitable containers and stored.

2. Method according to Claim 1, **characterized in that** the foodstuff starting materials having a water content of more than 45% by weight are selected from vegetables, fruits, seeds, meat and fish products, products based on dairy products and a mixture thereof.

3. Method according to Claim 2, **characterized in that** the foodstuff starting materials are fed to the extruder in frozen or fresh form.

4. Method according to Claim 2 or 3, **characterized in that** the foodstuff starting materials are fed in in precomminuted form.

5. Method according to any of Claims 1 to 4, **characterized in that** further foodstuff constituents which are selected from water, oils, fats, ingredients imparting nutritional value, dairy products, emulsifiers, biologically active substances and organisms, seasonings, salts, sugars, condiments, proteins and agents for influencing the consistency of the product to be produced are additionally fed to the extruder.

6. Method according to any of Claims 1 to 5, **characterized in that** the cooking and/or the UHT treatment or the pasteurisation are carried out with supply of externally generated superheated steam to the extruder.

7. Method according to Claim 1, **characterized in that** the products fed to the extruder and optionally cooked are comminuted by passing in through a comminution apparatus inserted into the transport path of the products.

8. Method according to Claim 7, **characterized in that** the comminution apparatus has cutting elements and/or a grid and/or hole structures and/or is of the colloid mill type.

9. Method according to any of Claims 1 to 8, **characterized in that** foodstuff constituents in dry form are additionally fed to the extruder before the UHT treatment or pasteurisation.

## Revendications

1. Procédé de préparation d'un produit alimentaire de type bouillie, faiblement visqueux, pour l'alimentation des nourrissons et enfants en bas-âge, à partir de produits de départ alimentaires avec une teneur en eau de plus de 45% en poids, **caractérisé en ce que** :
- on alimente les produits de départ sous forme entière, de morceaux, râpés ou broyés, avec surpression, dans un premier segment de travail, d'un dispositif de type extrudeuse, dans lequel on réalise un broyage ou un autre broyage, ainsi qu'une cuisson du produit de départ, où la cuisson est réalisée avant, pendant et/ou après le broyage,
- le produit de départ broyé et cuit est alimenté dans un deuxième segment de travail de l'extrudeuse, dans lequel un traitement thermique est réalisé dans des conditions UHT ou des conditions de pasteurisation,
- le produit traité UHT ou pasteurisé est dégazé et conduit directement hors de l'extrudeuse, dans une station d'emballage, où il
- est rempli dans des conditions aseptiques, ou
- rempli et soumis à une stérilisation et une pasteurisation In Pack ou
- rempli en tant que produit semi-fini, pour un autre traitement, dans un récipient approprié et stocké.

2. Procédé suivant la revendication 1, **caractérisé en que** les produits de départ alimentaires sont choisis avec une teneur en eau de plus de 45% en poids, parmi les légumes, les fruits, les graines, les produits de viande et de poisson, les produits à base de produits laitiers et leurs mélanges.

3. Procédé selon la revendication 2, **caractérisé en ce que** les produits de départ alimentaires sont alimentés à l'extrudeuse sous forme congelée ou fraîche.

4. Procédé suivant la revendication 2 ou 3, **caractérisé en ce que** le produit de départ alimentaire est alimenté sous forme préalablement broyée.

5. Procédé suivant l'une des revendications 1 à 4, **caractérisé en ce que** l'on alimente l'extrudeuse, en outre, avec d'autres constituants alimentaires, qui sont choisis parmi l'eau, des huiles, des graisses, des composés de valeur nutritionnelle, des produits laitiers, des émulsionnants, des substances biologiquement actives et des organismes, des épices, du sel, du sucre, des aromates, des protéines et des agents pour influencer la consistance du produit à préparer.

6. Procédé suivant une des revendications 1 à 5, **caractérisé en ce que** l'on réalise la cuisson et/ou le traitement d'UHT ou la pasteurisation avec apport de vapeur chaude produite de manière externe, dans l'extrudeuse.

7. Procédé suivant la revendication 1, **caractérisé en ce que** l'on broie les produits alimentés à l'extrudeuse et, le cas échéant, cuits **en ce que** l'on les introduit dans un dispositif de broyage intercalé dans la voie d'avancement du produit.

8. Procédé suivant la revendication 7, **caractérisé en ce que** le dispositif de broyage présente des éléments de découpe et/ou une structure de type réseau et/ou à trous et/ou est de type moulin colloïdal.

9. Procédé suivant une des revendications 1 à 8, **caractérisé en ce que** l'on alimente à l'extrudeuse, avant le traitement UHT ou la pasteurisation, des constituants alimentaires supplémentaires sous forme sèche.
